# EUROPEAN PATENT SPECIFICATION

(11) **EP 3 743 035 B1**
(45) Date of publication and mention of the grant of the patent: **05.03.2025**
(21) Application number: 19743995.3
(22) Date of filing: 17.01.2019
(51) Int. Cl.: A61J 3/07, B01J 13/14, C08G 12/32

(54) **METHOD OF FORMING MICROENCAPSULATED ACIDIC MATERIALS**
VERFAHREN ZUR HERSTELLUNG MIKROVERKAPSELTER SAURER MATERIALIEN
PROCÉDÉ DE FORMATION DE MATIÈRES ACIDES MICROENCAPSULÉES

(30) Priority: 23.01.2018 US 201862620657 P
(43) Date of publication of application: 02.12.2020
(73) Proprietor: Encapsys, LLC, Appleton, WI 54915 (US)
(72) Inventor: SCHWANTES, Todd, Arlin, Lena, WI 54139 (US)
(74) Representative: Carpmaels & Ransford LLP
(86) International application number: PCT/US2019/013976
(87) International publication number: WO 2019/147464

(56) References cited:
- EP-A1- 1 589 092
- EP-B1- 1 797 946
- WO-A1-2016/061439
- WO-A1-2016/207180
- WO-A1-2017/192648
- WO-A2-02/20683
- WO-A2-03/078043
- US-A- 4 101 520
- US-A1- 2007 021 533
- US-A1- 2008 305 982
- US-A1- 2009 087 662
- US-A1- 2011 152 147
- US-A1- 2012 093 899
- US-A1- 2017 281 480
- PRETZL M ET AL.: "Formation and mechanical characterization of aminoplast core/shell microcapsules", ACS APPL MATER INTERFACES, vol. 4, no. 6, 27 June 2012 (2012-06-27), pages 2940 - 8, XP055606804, [retrieved on 20120530]
- LEON G.: "Formaldehyde-free melamine microcapsules as core/shell delivery systems for encapsulation of volatile active ingredients", RSC ADV., July 2017 (2017-07-01), pages 18962 - 18975, XP055520601

## Description

### Field of the Invention

This invention relates to capsule manufacturing processes and more particularly a process for forming microencapsulated acidic materials, particularly organic acids. Microcapsules produced by such processes are also disclosed.

### Description of the Related Art

Various processes for microencapsulation, and exemplary methods and materials are set forth in various patents such as Schwantes (U.S. Pat. No. 6,592,990), Nagai et al. (U.S. Pat. No. 4,708,924), Baker et al. (U.S.Pat. No. 4,166,152), Wojciak (U.S. Pat. No. 4,093,556), Matsukawa et al. (U.S. Pat. No. 3,965,033), Matsukawa (U.S. Pat. No. 3,660,304), Ozono (U.S. Pat. No. 4,588,639), Irgarashi et al. (U.S. Pat. No. 4,610,927), Brown et al. (U.S. Pat. No. 4,552,811), Scher (U.S. Pat. No. 4,285,720), Shioi et al. (U.S. Pat. No. 4,601,863), Kiritani et al. (U.S. Pat. No. 3,886,085), Jahns et al. (U.S. Pat. Nos. 5,596,051 and 5,292,835), Matson (U.S. Pat. No. 3,516,941), Chao (U.S. Pat. No. 6,375,872), Foris et al. (U.S. Pat. Nos. 4,001,140; 4,087,376; 4,089,802 and 4,100,103), Greene et al. (U.S. Pat. Nos. 2,800,458; 2,800,457 and 2,730,456), Clark (U.S. Pat. No. 6,531,156), Saeki et al. (U.S. Pat. No. 4,251,386 and 4,356,109), Hoshi et al. (U.S. Pat. No. 4,221,710), Hayford (U.S. Pat. No. 4,444,699), Hasler et al. (U.S. Pat. No. 5,105,823), Stevens (U.S. Pat. No. 4,197,346), Riecke (U.S. Pat. No. 4,622,267), Greiner et al. (U.S. Pat. No. 4,547,429), and Tice et al. (U.S. Pat. No. 5,407,609), among others and as taught by Herbig in the chapter entitled "Microencapsulation" in Kirk-Othmer Encyclopedia of Chemical Technology, V.16, pages 438-463.

Other useful methods for microcapsule manufacture are: Foris et al., U.S. Pat. Nos. 4,001,140 and 4,089,802 describing a reaction between urea and formaldehyde; Foris et al., U.S. Pat. No. 4,100,103 describing reaction between melamine and formaldehyde; and British Pat. No. 2,062,570 describing a process for producing microcapsules having walls produced by polymerization of melamine and formaldehyde in the presence of a styrene sulfonic acid. Forming microcapsules from urea-formaldehyde resin and/or melamine formaldehyde resin is disclosed in U.S. Pat. Nos. Foris et al., 4,001,140; Foris et al., 4,089,802; Foris et al., 4,100,103; Foris et al., 4,105,823; and Hayford, 4,444,699. Alkyl acrylate-acrylic acid copolymer capsules are taught in Brown et al., U.S. Pat. No. 4,552,811.

Interfacial polymerization is a process wherein a microcapsule wall such as polyamide, an epoxy resin, a polyurethane, a polyurea or the like is formed at an interface between two phases. Riecke, U.S. Pat. No. 4,622,267 discloses an interfacial polymerization technique for preparation of microcapsules. The core material is initially dissolved in a solvent and an aliphatic diisocyanate soluble in the solvent mixture is added. Subsequently, a nonsolvent for the aliphatic diisocyanate is added until the turbidity point is just barely reached. This organic phase is then emulsified in an aqueous solution, and a reactive amine is added to the aqueous phase. The amine diffuses to the interface, where it reacts with the diisocyanate to form polymeric polyurethane shells. A similar technique, used to encapsulate salts which are sparingly soluble in water in polyurethane shells, is disclosed in Greiner et al., U.S. Pat. No. 4,547,429. Matson, U.S. Pat. No. 3,516,941 teaches polymerization reactions in which the material to be encapsulated, or core material, is dissolved in an organic, hydrophobic oil phase which is dispersed in an aqueous phase. The aqueous phase has dissolved materials forming aminoplast (amine and aldehyde) resin which upon polymerization form the wall of the microcapsule. A dispersion of fine oil droplets is prepared using high shear agitation. Addition of an acid catalyst initiates the polycondensation forming the aminoplast resin within the aqueous phase, resulting in the formation of an aminoplast polymer which is insoluble in both phases. As the polymerization advances, the aminoplast polymer separates from the aqueous phase and deposits on the surface of the dispersed droplets of the oil phase to form a capsule wall at the interface of the two phases, thus encapsulating the core material. Urea-formaldehyde (UF), urea-resorcinol-formaldehyde (URF), urea-melamine-formaldehyde (UMF), and melamine-formaldehyde (MF), capsule formations proceed in a like manner. In interfacial polymerization, the materials to form the capsule wall are in separate phases, one in an aqueous phase and the other in an oil phase. Polymerization occurs at the phase boundary. Thus, a polymeric capsule shell wall forms at the interface of the two phases thereby encapsulating the core material. Wall formation of polyester, polyamide, and polyurea capsules also typically proceeds via interfacial polymerization.

Common microencapsulation processes can be viewed as a series of steps. First, the core material which is to be encapsulated is typically emulsified or dispersed in a suitable dispersion medium. This medium is typically aqueous but involves the formation of a polymer rich phase. Most frequently, this medium is a solution of the intended capsule wall material. The solvent characteristics of the medium are changed such as to cause phase separation of the wall material. The wall material is thereby contained in a liquid phase which is also dispersed in the same medium as the intended capsule core material. The liquid wall material phase deposits itself as a continuous coating about the dispersed droplets of the internal phase or capsule core material. The wall material is then solidified. This process is commonly known as coacervation.

In melamine formaldehyde processes using alkylated melamine precondensates such as methylated methylol melamine, during core material emulsification, premature polymerization of the methylated methylol melamine precondensate is often a problem. To combat this tendency, in prior art processes the pH is raised to the highest level at which emulsification can still be effected. The problem with the prior attempts is that elevating the pH can destroy intended acidic cores making encapsulation of acidic materials difficult to realize.

Although polycondensation of alkylated melamine formaldehyde resins such as alkylated methylol melamine resins in the presence of protective colloids is known, a need continues to exist for durable encapsulates of acidic material, such as organic acids.

The condensation of melamine formaldehyde resin can proceed under acid conditions. However, encapsulation of acidic materials with melamine formaldehyde has been difficult due to the reactivity of melamine formaldehyde resin.

For better reaction control, alkylated melamine formaldehyde resins such as alkylated methylol melamine formaldehyde resins have been prepared. These resins react in the presence of acidic materials such as citric acid, formic acid, acetic acid, oxalic acid, toluene sulfonic acid, hydrochloric acid, phthalic acid, maleic acid, sulfuric acid, trichloroacetic acid, p-toluene sulfonic acid or phosphoric acid, and the like, making their use in encapsulation of acidic materials problematic.

Until the invention, it has been challenging to attempt to form melamine formaldehyde core-shell microcapsules encapsulating an acidic material.

US 2007/0021533 A1 discloses "an encapsulated curable adhesive composition especially adapted for use as a structural adhesive."

### Summary of the Invention

The present invention teaches a method of forming core-shell microcapsules encapsulating an acidic material, the microcapsules obtained by condensation of a fully alkylated melamine resin in the presence of a protective colloid. The method comprises preparing an aqueous dispersion in water of an acrylic acid-alkyl acrylate copolymer, a fully alkylated melamine resin, and adjusting the pH of the aqueous dispersion to be pH 5 or less. An intended acidic core material is added to the aqueous dispersion while applying high shear agitation to form an emulsion with droplet or particle size of less than 50 microns, or even less than 20 microns, or even less than 10 microns. Adding a sulfate salt to the emulsion aids in increasing the hydrophilicity of the emulsion and helps driving the forming wall material out of solution. Polycondensation of the alkylated melamine resin is effected with heating, thereby enwrapping particles or droplets of the acidic core material with polymeric shells of the polycondensed alkylated melamine resin. With further heating the microcapsule wall is further cured and hardened.

The acidic core material can be added to the aqueous dispersion as a solid particulate, or alternatively, the acidic core material can even be added to the aqueous dispersion as an acid dissolved or dispersed in an oil phase. If desired, a formaldehyde scavenger such as ammonia can be added after microcapsule curing and the pH can be adjusted to be alkaline. Preferably the formaldehyde scavenger is added after microcapsule curing. The alkylated melamine resin in certain embodiments can be a fully methylated methylol melamine resin. In the process of the invention the pH of the aqueous dispersion in the first step is adjusted to be pH 5 or less, or even pH 4.5 or less, or even pH 3 or less. The pH can be adjusted with addition of acid such as citric acid. During emulsification, the droplet or particle size of the emulsion is mixed under high shear agitation preferably achieving a size of 15 microns or less. Heating in the polycondensation step is from about 30°C to about 98 °C over an extended time period. Further heating to cure is from 55°C to 98 °C over several hours.

In Example 1, herein, initial heating was at 30°C with ramp to 95 °C over 230 minutes. This was followed by curing at 95°C over eight hours. In Example 2, initial heating was at 20 °C and then from 22°C to 95 °C over 240 minutes. This was followed by curing at 95°C over eight hours. Desirably a protective colloid such as acrylic acid-butyl acrylate copolymer is also employed. Alternative protective colloid copolymers can be selected from the group of co-polymers consisting of acrylic acid-butyl acrylate, acrylic acid-ethyl acrylate, acrylic acid-propyl acrylate, acrylic acid-amyl acrylate, acrylic acid-hexyl acrylate, acrylic acid-cyclohexyl acrylate, and acrylic acid-ethylhexyl acrylate. The intended acidic core material can be any of various organic acids such as carboxylic acid. For example, the acidic core material can be selected from terephthalic acid or oleic acid.

Alkylated methylol melamine resins generally are the products of the condensation of 1 molar proportion of melamine with up to 6 molar proportions of formaldehyde, then further alkylated with up to 6 molar proportions of a lower aliphatic alcohol, and 6 molar proportions of aliphatic alcohol to obtain fully alkylated methylol melamine.

The fully alkylated melamine resin precondensates useful in the invention are alkylated methylol melamine precondensate, and particularly fully alkylated methylol melamine precondensate such as fully methylated methylol melamine precondensate. Alkyl groups are preferably of 1 to 8 carbons.

### Detailed Description

Aqueous melamine formaldehyde precondensates have found use in a variety of applications. One such use is in microencapsulation of the core-shell type, where a wall material is formed of the condensed melamine formaldehyde precondensate by condensing over a period of time at elevated temperatures and/or addition of acid to promote the condensation reaction.

The invention describes an improved process for preparing an encapsulated acidic material within a core-shell microcapsule.

Encapsulation of acidic materials within shells formed of melamine formaldehyde resins has been difficult as acidic materials tend to promote polymerization of melamine formaldehyde precondensates such as alkylated melamine resin precondensates.

In the process of the invention a core-shell microcapsule of the melamine formaldehyde type is used to encapsulate an acidic material, such as an organic acid. The melamine formaldehyde resin is an alkylated melamine precondensate, and particularly a fully alkylated melamine resin precondensate.

The melamine formaldehyde precondensate, such as an alkylated melamine formaldehyde precondensate is used in an amount of from 2 to 50 parts per 100 parts by weight of the intended core material.

pH of the emulsion can be adjusted with materials such as citric acid, formic acid, acetic acid, oxalic acid, toluene sulfonic acid, hydrochloric acid, phthalic acid, maleic acid, sulfuric acid, trichloroacetic acid, p-toluene sulfonic acid or phosphoric acid.

For hardening of the capsules, curing was effected at elevated temperature, such as 95 °C over 8 hours.

The concentration of precondensate in the aqueous medium is from about 5% to 35% by weight. For capsule formation, the precondensate is dispersed in water. Desirably a protective copolymer such as an acrylic acid-alkyl acrylate copolymer in an amount of from about 0.5 to 20 parts by weights of the precondensate wall material is employed. A 0.25 : 1 to about a 3 : 1 proportion of copolymer to precondensate ratio by weight can be useful.

The intended core material is emulsified into the water dispersion forming desirably a low viscosity emulsion. The target droplet size of the core material is less than 50 microns, or even less than 15 microns, or even the majority of the droplets are in a range from 1 to 10 microns, or an even narrower size distribution.

Generally, the pH of the emulsion of precondensate, protective colloid and core material is maintained at a range of pH from about 3 to 6.8.

Shell formation by curing proceeds with heating and the ramp in heating is in the range of from about 50 °C to 65 °C, or even to 70 °C, or even to 80 °C, or even to 95 °C, or higher, over a period of hours. The examples herein further illustrate the heating steps and heating ramp, meaning rate of heat increase over time.

Sodium sulfate or other sulfate salt is added to promote phase separation of the condensing alkylated melamine formaldehyde precondensate. The amount of sodium sulfate is from about 0.1 to about 5 parts by weight precondensate and colloid.

Condensation and deposit of the alkylated melamine formaldehyde around and onto a particle or droplet of the intended core material is accomplished by adjusting the pH and/or heating to promote the condensation reaction.

Melamine formaldehyde precondensates mean alkylol melamine prepolymers such as mono to hexamethylol melamines or a mixture of methylol melamines, all of which are further alkylated forming fully alkylated methylol melamines.

Optionally anionic surfactants, such as sodium dodecylbenzene sulfonate or other alkylaryl sulfonates or salts of aliphatic acids, can be included in addition.

The acidic core materials, which can be encapsulated by the invention, include terephthalic acid, oleic acid and other acids which are either solids or liquids dispersible in the oil phase. In particular, various oil soluble or oil dispersible organic acids can be encapsulated. Solid organic acids can also be encapsulated by the process of the invention.

The organic acids useful as a core material can include carboxylic acid, salts of carboxylic acid, di-, tri- and polycarboxylic acid and can include formic acid, citric acid, oxalic acid, lactic acid, maleic acid, benzoic acid, stearic acid, salicylic acid, ascorbic acid, gallic acid, lactic acid, phthalic acid, sorbic acid, sulfonilic acid, tannic acid, tartaric acid, succinic acid and the like.

The term oil phase as used herein refers to generally hydrophobic oils and can include by way of illustration and not limitation, various hydrocarbons and hydrocarbon solvents such as ethyldiphenylmethane, butyl biphenyl ethane, benzylxylene, alkyl biphenyls such as propylbiphenyl and butylbiphenyl, dialkyl phthalates e.g. dibutyl phthalate, dioctylphthalate, dinonyl phthalate and ditridecylphthalate; 2,2,4-trimethyl-1,3-pentanediol diisobutyrate, alkyl benzenes such as dodecyl benzene; but also carboxylates, ethers, or ketones such as diaryl ethers, di(aralkyl)ethers and aryl aralkyl ethers, ethers such as diphenyl ether, dibenzyl ether and phenyl benzyl ether, liquid higher alkyl ketones (having at least 9 carbon atoms), alkyl or aralky benzoates, e.g., benzyl benzoate, alkylated naphthalenes such as dipropylnaphthalene, partially hydrogenated terphenyls; high-boiling straight or branched chain hydrocarbons, arenes and alkaryl hydrocarbons such as toluene, glycerides, tri-glycerides, vegetable oils such as canola oil, soybean oil, corn oil, sunflower oil, or cottonseed oil, methyl esters of fatty acids derived from transesterification of canola oil, soybean oil, cottonseed oil, corn oil, sunflower oil, pine oil, lemon oil, olive oil, or methyl ester of oleic acid, vegetable oils, esters of vegetable oils, e.g. soybean methyl ester, straight chain saturated paraffinic aliphatic hydrocarbons of from 10 to 13 carbons; C8 - C42 esters, ethyl hexanoate, methyl heptanoate, butyl butyrate, methyl benzoate, methyl nonoate, methyl decanoate, methyl dodecanoate, methyl octanoate, methyl laurate, methyl myristate, methyl palmitate, methyl stearate, ethyl heptanoate, ethyl octanoate, ethyl nonoate, ethyl decanoate, ethyl dodecanoate, ethyl laurate, ethyl myristate, ethyl palmitate, ethyl stearate, isopropyl myristate, isopropyl palmitate, ethylhexyl palmitate, isoamyl laurate, butyl laurate, octyl octanoate, decyl decanoate, butyl stearate, lauryl laurate, stearyl palmitate, stearyl stearate, stearyl behenate, behenyl behenate and the like. Mixtures of the above can also be employed.

After capsule formation, further heating such as at 95 °C for several hours can be used to effect curing of the capsules.

By adjusting the rate of high shear agitation, particularly during or following precondensate agitation, to mill rates of less than 1600 rpm, agglomeration can be enhanced. In some applications agglomerates are desired to create more concentrated domains or clusters, such as for certain coated substrates where it is desirable to raise the cluster above the substrate. Single capsules, although useful, in certain applications such as porous paper, are less preferable than agglomerates, which can bridge gaps. Agglomeration can be adjusted by reduced rate of high shear agitation and/or combined with slower rates of addition of the acid and/or amount or rate of addition of the sulfate salt.

pH of the microcapsule dispersion can be adjusted after capsule formation such as with ammonium hydroxide to elevate the pH to the alkaline side and to help scavenge for formaldehyde. Optionally, other conventional formaldehyde scavengers can be adapted, such as acetoacetamide, urea, ammonium bisulfite, melamine, lysine, sodium bisulfite, ethylene urea, cysteine, cysteamine, glycine, serine, carnosine, histidine, glutathione, 3,4- diaminobenzoic acid, allantoin, glycouril, anthranilic acid, methyl anthranilate, methyl 4- aminobenzoate, ethyl acetoacetate, acetoacetamide, malonamide, ascorbic acid, 1,3- dihydroxyacetone dimer, biuret, oxamide, benzoguanamine, pyroglutamic acid, pyrogallol, methyl gallate, ethyl gallate, propyl gallate, triethanol amine, succinamide, thiabendazole, benzotriazol, triazole, indoline, sulfanilic acid, oxamide, sorbitol, glucose, cellulose, poly( vinyl alcohol), partially hydrolyzed poly(vinylformamide), poly( vinyl amine), poly(ethylene imine), poly(oxyalkyleneamine), poly( vinyl alcohol)-co-poly(vinyl amine), poly(4-ammostyrene), poly(l-lysine), chitosan, hexane diol, ethylenediamine- N,N'-bisacetoacetamide, N-(2-ethylhexyl)acetoacetamide, 2-benzoylacetoacetamide, N- (3-phenylpropyl)acetoacetamide, lilial, helional, melonal, triplal, 5,5-dimethyl-1,3-cyclohexanedione, 2,4-dimethyl-3-cyclohexenecarboxaldehyde, 2,2-dimethyl-1,3-dioxan-4,6-dione, 2-pentanone, dibutyl amine, triethylenetetramine, ammonium hydroxide, benzylamine, hydroxycitronellol, cyclohexanone, 2-butanone, pentane dione, dehydroacetic acid, or a mixture thereof.

These scavengers can be included as part of the formed microcapsule slurry or optionally included in the core material in capsule formation.

### Examples

In the following examples, the chemicals correspond to the following materials.

| Trade Name | Company/City | Material |
|---|---|---|
| Kemecal 351 | | butyl acrylate-acrylic acid copolymer |
| Cymel 350 | | fully methylated melamine resin |
| Captex 355 | Abitec Corp., Columbus, OH | medium chain triglyceride based on caprylic and capric acid |

### Example 1

Water Phase:
   257g water
   30g Kemecal 351
   3.32g 10% citric Acid
   28g Cymel 350
   4g sodium sulfate
   14.58g ammonium sulfate (28% ammonia)
Oil Phase
   135g core (25% oleic acid, 75% Captex 355)

The water and Kemecal 351 was mixed in a 1L steel jacketed reactor for 15 minutes at 30C using a 4-tip flat mill blade at about 750rpm. The water phase pH was adjusted to 4.5 with 10% citric acid solution. The Cymel 350 resin was added over the course of about 4 minutes. After 1 additional minute of mixing, the core was added to the reactor over a period of 10 minutes. Mill to target size. The target mill size was 12 microns, and milling was started at 1600 rpm. Milling was continued for 20 minutes, and was gradually increased to 2000 rpm to achieve target size. After milling was completed, mixing was done with a 3" propeller, run at 390 rpm. The sodium sulfate was added. The batch was heated from 30C to 95C in 230 minutes and held at 95C for 8 hours before cooling back to room temperature. Ammonia was added to a pH target of 9.2.

### Example 2

Water Phase:
   241.4g water
   6.8g Kemecal 351
   7.67g 50% citric acid
   46.8g Cymel 350
   2.7g sodium sulfate
   62.2g 26 DEG aqua ammonia (28% ammonia)
Core:
   100 g TA-22 terephthalic acid

Water phase materials were combined in a plastic beaker and mixed at room temperature with a magnetic stir bar. The water phase pH was adjusted to pH 3.5 with 50% citric acid. The water phase was added to a 1L jacketed steel reactor (at 20C), and mixed at 750 rpm with a 4-tip flat mill for 5 minutes. The core was added over 10 minutes and then mixed for 15 minutes at 1500 rpm. Cymel 350 was added over 4 minutes, then mixed for an additional 1 minute at 1500 rpm. Mixing was continued for 30 minutes at 2000 rpm. Sodium sulfate was added, mixing was begun at 400 rpm with a 3" propeller blade. The batch was heated from 20-22C rapidly, then heated from 22 to 95C in 240 minutes and held at 95C for 8 hours. The batch was cooled back to room temperature, where the aqua ammonia was added.

All percentages and ratios are calculated by weight unless otherwise indicated. All percentages and ratios are calculated based on the total composition unless otherwise indicated.

It should be understood that every maximum numerical limitation given throughout this specification includes every lower numerical limitation, as if such lower numerical limitations were expressly written herein. Every minimum numerical limitation given throughout this specification will include every higher numerical limitation, as if such higher numerical limitations were expressly written herein. Every numerical range given throughout this specification will include every narrower numerical range that falls within such broader numerical range, as if such narrower numerical ranges were all expressly written herein.

Uses of singular terms such as "a," "an," are intended to cover both the singular and the plural, unless otherwise indicated herein or clearly contradicted by context. The terms "comprising," "having," "including," and "containing" are to be construed as open-ended terms. Any description of certain embodiments as "preferred" embodiments, and other recitation of embodiments, features, or ranges as being preferred, or suggestion that such are preferred, is not deemed to be limiting. The invention is deemed to encompass embodiments that are presently deemed to be less preferred and that may be described herein as such. All methods described herein can be performed in any suitable order unless otherwise indicated herein or otherwise clearly contradicted by context. The use of any and all examples, or exemplary language (e.g., "such as") provided herein, is intended to illuminate the invention and does not pose a limitation on the scope of the invention. Any statement herein as to the nature or benefits of the invention or of the preferred embodiments is not intended to be limiting. The description herein of any reference or patent, even if identified as "prior," is not intended to constitute a concession that such reference or patent is available as prior art against the present invention. No unclaimed language should be deemed to limit the invention in scope. Any statements or suggestions herein that certain features constitute a component of the claimed invention are not intended to be limiting unless reflected in the appended claims.

## Claims

1. A method of forming core-shell microcapsules encapsulating an acidic material, the microcapsules being obtained by condensation of a fully alkylated melamine resin precondensate in the presence of a protective colloid, the method comprising:
(a) preparing an aqueous dispersion in water of an acrylic acid-alkyl acrylate copolymer, a fully alkylated melamine resin precondensate, and adjusting the pH of the aqueous dispersion to be pH 5 or less;
(b) adding an acidic core material to the aqueous dispersion while applying high shear agitation to form an emulsion with droplet or particle size of less than 50 microns;
(c) adding a sulfate salt to the emulsion;
(d) heating to effect polycondensation of the alkylated melamine resin precondensate, thereby enwrapping particles or droplets of the acidic core material with polymeric shells of the polycondensed alkylated melamine resin, and,
(e) further heating to cure the microcapsules.

2. The method according to claim 1 wherein the acidic core material is added to the aqueous dispersion as a solid particulate.

3. The method according to claim 1 wherein the acidic core material is added to the aqueous dispersion as an acid dissolved or dispersed in an oil phase.

4. The method according to claim 1 wherein ammonia is added after microcapsule curing and pH adjusted to be alkaline.

5. The method according to claim 1 wherein a formaldehyde scavenger is added after microcapsule curing.

6. The method according to claim 1 wherein the alkylated melamine resin precondensate is a fully methylated methylol melamine resin.

7. The method according to claim 1 wherein the pH of the aqueous dispersion in step (a) is adjusted with addition of citric acid.

8. The method according to claim 1 wherein in step (b) the droplet or particle size of the emulsion is 15 microns or less.

9. The method according to claim 1 wherein heating in step (d) is from 30°C to 98 °C.

10. The method according to claim 1 wherein heating in step (e) is from 55°C to 98 °C.

11. The method according to claim 1 wherein the protective colloid is acrylic acid-butyl acrylate copolymer.

12. The method according to claim 1 wherein the sulfate salt is an alkali metal sulfate optionally wherein the sulfate salt is sodium sulfate.

13. The method according to claim 1 wherein the protective colloid copolymer is selected from the group of co-polymers consisting of acrylic acid-butyl acrylate, acrylic acid-ethyl acrylate, acrylic acid-propyl acrylate, acrylic acid-amyl acrylate, acrylic acid-hexyl acrylate, acrylic acid-cyclohexyl acrylate, and acrylic acid-ethylhexyl acrylate.

14. The method according to claim 1 wherein the acidic core material is a carboxylic acid; optionally wherein the acidic core material is selected from terephthalic acid or oleic acid.

15. The method of claim 1 wherein high shear agitation in step (b) is carried out by stirring at less than 1500 rpm to promote forming an emulsion with agglomerated droplets or particles.

## Patentansprüche

1. Verfahren zur Herstellung von Kern-Schale-Mikrokapseln, die ein saures Material verkapseln, wobei die Mikrokapseln durch Kondensation eines vollständig alkylierten Melaminharz-Vorkondensats in Gegenwart eines Schutzkolloids erhalten werden, wobei das Verfahren umfasst:
(a) Herstellen einer wässrigen Dispersion eines Acrylsäure-Alkylacrylat-Copolymers, eines vollständig alkylierten Melaminharz-Vorkondensats in Wasser und Einstellen des pH-Werts der wässrigen Dispersion auf pH 5 oder weniger;
(b) Zugeben eines sauren Kernmaterials zu der wässrigen Dispersion unter Anwendung von Bewegung mit hoher Scherkraft, um eine Emulsion mit Tröpfchen- oder Partikelgröße von weniger als 50 Mikrometer zu bilden;
(c) Zugeben eines Sulfatsalzes zu der Emulsion;
(d) Erhitzen, um Polykondensation des alkylierten Melaminharz-Vorkondensats zu bewirken, um dadurch Partikel oder Tröpfchen des sauren Kernmaterials mit Polymerschalen des polykondensierten alkylierten Melaminharzes zu umhüllen, und
(e) weiteres Erhitzen zum Härten der Mikrokapseln.

2. Verfahren nach Anspruch 1, wobei das saure Kernmaterial als festes Partikulat zu der wässrigen Dispersion zugegeben wird.

3. Verfahren nach Anspruch 1, wobei das saure Kernmaterial als eine in einer Ölphase gelöste oder dispergierte Säure zu der wässrigen Dispersion zugegeben wird.

4. Verfahren nach Anspruch 1, wobei nach Mikrokapselhärten Ammoniak zugegeben und der pH-Wert auf alkalisch eingestellt wird.

5. Verfahren nach Anspruch 1, wobei nach Mikrokapselhärten ein Formaldehydfänger zugegeben wird.

6. Verfahren nach Anspruch 1, wobei das alkylierte Melaminharz-Vorkondensat ein vollständig methyliertes Methylolmelaminharz ist.

7. Verfahren nach Anspruch 1, wobei der pH-Wert der wässrigen Dispersion bei Schritt (a) mit Zugabe von Citronensäure eingestellt wird.

8. Verfahren nach Anspruch 1, wobei bei Schritt (b) die Tröpfchen- oder Partikelgröße der Emulsion 15 Mikrometer oder weniger beträgt.

9. Verfahren nach Anspruch 1, wobei Erhitzen bei Schritt (d) von 30 °C bis 98 °C beträgt.

10. Verfahren nach Anspruch 1, wobei Erhitzen bei Schritt (e) von 55 °C bis 98 °C beträgt.

11. Verfahren nach Anspruch 1, wobei das Schutzkolloid Acrylsäure-Butylacrylat-Copolymer ist.

12. Verfahren nach Anspruch 1, wobei das Sulfatsalz ein Alkalimetallsulfat ist; gegebenenfalls wobei das Sulfatsalz Natriumsulfat ist.

13. Verfahren nach Anspruch 1, wobei das Schutzkolloid-Copolymer ausgewählt ist aus der Gruppe von Copolymeren bestehend aus Acrylsäure-Butylacrylat, Acrylsäure-Ethylacrylat, Acrylsäure-Propylacrylat, Acrylsäure-Amylacrylat, Acrylsäure-Hexylacrylat, Acrylsäure-Cyclohexylacrylat und Acrylsäure-Ethylhexylacrylat.

14. Verfahren nach Anspruch 1, wobei das saure Kernmaterial eine Carbonsäure ist; gegebenenfalls wobei das saure Kernmaterial ausgewählt ist aus Terephthalsäure und Ölsäure.

15. Verfahren nach Anspruch 1, wobei Bewegen mit hoher Scherkraft bei Schritt (b) durch Rühren mit weniger als 1500 U/min durchgeführt wird, um die Entstehung einer Emulsion mit agglomerierten Tröpfchen oder Partikeln zu fördern.

## Revendications

1. Procédé de formation de microcapsules noyauenveloppe encapsulant une matière acide, les microcapsules étant obtenues par condensation d'un précondensat de résine de mélamine entièrement alkylée en présence d'un colloïde protecteur, le procédé comprenant :
(a) la préparation d'une dispersion aqueuse dans l'eau d'un copolymère acide acrylique-acrylate d'alkyle, d'un précondensat de résine de mélamine entièrement alkylée, et l'ajustement du pH de la dispersion aqueuse jusqu'à être pH 5 ou moins ;
(b) l'ajout d'un matériau de noyau acide à la dispersion aqueuse tout en appliquant une agitation à cisaillement élevé pour former une émulsion dont la taille des gouttelettes ou des particules est inférieure à 50 microns ;
(c) l'ajout d'un sel sulfate à l'émulsion ;
(d) un chauffage pour effectuer la polycondensation du précondensat de résine de mélamine alkylée, enveloppant ainsi les particules ou les gouttelettes du matériau de noyau acide avec des enveloppes polymériques de la résine de mélamine alkylée polycondensée, et,
(e) un chauffage supplémentaire pour durcir les microcapsules.

2. Procédé selon la revendication 1, dans lequel le matériau de noyau acide est ajouté à la dispersion aqueuse sous forme de particules solides.

3. Procédé selon la revendication 1, dans lequel le matériau de noyau acide est ajouté à la dispersion aqueuse sous forme d'un acide dissous ou dispersé dans une phase huileuse.

4. Procédé selon la revendication 1, dans lequel de l'ammoniac est ajouté après durcissement des microcapsules et le pH est ajusté pour être alcalin.

5. Procédé selon la revendication 1, dans lequel un agent de piégeage de formaldéhyde est ajouté après durcissement des microcapsules.

6. Procédé selon la revendication 1, dans lequel le précondensat de résine de mélamine alkylée est une résine de méthylol mélamine entièrement méthylée.

7. Procédé selon la revendication 1, dans lequel le pH de la dispersion aqueuse dans l'étape (a) est ajusté par ajout d'acide citrique.

8. Procédé selon la revendication 1, dans lequel, dans l'étape (b), la taille des gouttelettes ou des particules de l'émulsion est de 15 microns ou moins.

9. Procédé selon la revendication 1, dans lequel le chauffage dans l'étape (d) est de 30 °C à 98 °C.

10. Procédé selon la revendication 1, dans lequel le chauffage dans l'étape (e) est de 55 °C à 98 °C.

11. Procédé selon la revendication 1, dans lequel le colloïde protecteur est un copolymère acide acrylique-acrylate de butyle.

12. Procédé selon la revendication 1, dans lequel le sel sulfate est un sulfate de métal alcalin ; éventuellement dans lequel le sel sulfate est le sulfate de sodium.

13. Procédé selon la revendication 1, dans lequel le copolymère de colloïde protecteur est choisi dans le groupe de copolymères constitué par un acide acrylique-acrylate de butyle, un acide acrylique-acrylate d'éthyle, un acide acrylique-acrylate de propyle, un acide acrylique-acrylate d'amyle, un acide acrylique-acrylate d'hexyle, un acide acrylique-acrylate de cyclohexyle, et un acide acrylique-acrylate d'éthylhexyle.

14. Procédé selon la revendication 1, dans lequel le matériau de noyau acide est un acide carboxylique ; éventuellement dans lequel le matériau de noyau acide est choisi parmi l'acide téréphtalique ou l'acide oléique.

15. Procédé selon la revendication 1, dans lequel l'agitation à cisaillement élevé dans l'étape (b) est effectuée par agitation à moins de 1 500 tpm pour favoriser la formation d'une émulsion avec des gouttelettes ou des particules agglomérées.
